# DEMANDE DE BREVET EUROPEEN

(11) **EP 1 614 873 A2**
(43) Date de publication de la demande: **11.01.2006**
(21) Numéro de dépôt: 05356115.5
(22) Date de dépôt: 07.07.2005
(51) Int. Cl.: F01P 7/16, G05D 23/13

(54) **Vanne pour un circuit de circulation de fluide et circuit associé à un moteur comportant une telle vanne**

(30) Priorité: 08.07.2004 FR 0407641
(71) Demandeur: VERNET S.A., 91340 Ollainville (FR)
(72) Inventeur: Pottie, Nicolas, 91700 Sainte Genevieve des Bois (FR); Bouloy, Alain Bernard Armand, 91580 Etrechy (FR)
(74) Mandataire: Myon, Gérard Jean-Pierre

(57) **Abrégé**

Cette vanne (1) comporte un boîtier (10) délimitant intérieurement une chambre (16) alimentée en fluide, un élément thermostatique (50) et un tiroir (60) de commande de l'écoulement du fluide de la chambre vers une sortie de fluide (26) délimitée par le boîtier (10). Le tiroir est adapté pour, d'une part, être déplacé en translation par une partie mobile (54) de l'élément thermostatique (50) entre des première et seconde positions d'obturation de la sortie pour les hautes et basses températures du fluide circulant dans la chambre, et, d'autre part, laisser s'écouler le fluide à température intermédiaire. Pour éviter une surpression interne de la vanne, ce tiroir est équipé de moyens pressostatiques (100, 102, 104, 110) qui laissent s'écouler le fluide à travers le tiroir en cas de surpression en amont du tiroir, indépendamment de la température du fluide.

## Description

La présente invention concerne une vanne pour un circuit de circulation d'un fluide, à l'intérieur de laquelle l'écoulement du fluide est régulé de manière thermostatique.

Elle s'applique en particulier aux circuits de refroidissement associés aux moteurs de véhicules automobiles ou analogues. Ce type de vanne thermostatique est utilisé pour répartir le fluide entrant dans la vanne dans différentes voies de sortie, en fonction des caractéristiques, notamment de la température, de ce fluide entrant.

Ainsi, de manière classique, la vanne est alimentée en fluide de refroidissement chaud, provenant du moteur, et envoie ce fluide vers un radiateur chargé d'évacuer la chaleur excédentaire du fluide de refroidissement et/ou vers un aérotherme destiné à chauffer l'air de l'habitacle du véhicule. En sortie du radiateur et de l'aérotherme, le fluide de refroidissement est entraîné, notamment par une pompe, vers le moteur pour limiter la température de ce dernier. En plus des sorties vers le radiateur et l'aérotherme, la vanne est généralement pourvue d'une sortie supplémentaire vers une voie dite de bi-passe, destinée à renvoyer directement en entrée du moteur au moins une partie du fluide entrant dans la vanne. Cette voie de bi-passe garantit ainsi la circulation permanente d'une boucle de refroidissement du moteur, même lorsque les voies de circulation de ce fluide associées au radiateur et à l'aérotherme sont fermées de manière intempestive. Cette voie de bi-passe présente cependant l'inconvénient de laisser une partie du fluide sortant de la vanne s'écouler directement vers le moteur, privant d'autant de fluide le radiateur et réduisant donc les capacités d'évacuation de la chaleur produite par le moteur, notamment lorsque ce dernier fonctionne à haut régime.

Pour contourner cet inconvénient, il est connu d'utiliser un système à double obturateur, par exemple à double clapet, commandé en déplacement par rapport au boîtier de vanne par un élément thermostatique. Un premier clapet, commandé en déplacement par une partie de cet élément thermostatique, régule l'écoulement du fluide sortant de la vanne en direction du radiateur tandis que le second clapet, commandé en déplacement par une autre partie de l'élément thermostatique, régule l'écoulement du fluide sortant vers la voie de bi-passe. L'élément thermostatique et les deux clapets sont agencés de manière que le premier clapet s'écarte progressivement de son siège et laisse ainsi passer le fluide vers le radiateur alors que, simultanément, le second clapet se rapproche de son siège et obture progressivement l'écoulement de fluide dans la voie de bi-passe. Lorsque la température du fluide entrant s'élève à une valeur prédéterminée, l'élément thermostatique agit sur le second clapet pour obturer totalement la voie de bi-passe et ainsi permettre d'envoyer la quasi-totalité de ce fluide vers le radiateur, une petite partie de ce fluide continuant d'alimenter la voie de l'aérotherme.

L'agencement classique décrit ci-dessus présente cependant un inconvénient lors du démarrage du véhicule, c'est-à-dire, de manière plus générale, lorsque la température du fluide de refroidissement est inférieure à la plage normale de régulation thermostatique. En effet, lorsque la température du fluide entrant dans la vanne est basse, la voie de l'aérotherme est privée d'une partie de ce fluide, qui circule dans la voie de bi-passe largement ouverte. Les échanges thermiques le long de la voie de l'aérotherme sont donc limités, les besoins de chauffage de l'habitacle du véhicule risquant alors de ne pas être satisfaits. De plus, la boucle de fluide circulant par la voie de bi-passe crée une zone de montée en température plus rapide que celle du reste du moteur, cette hétérogénéité thermique risquant d'induire des contraintes thermiques pour le circuit et des disfonctionnements du moteur.

DE-A-29 32 078 propose un agencement de vanne à même de contourner cet inconvénient : lorsque la température du fluide alimentant la vanne est soit inférieure à une valeur seuil basse, soit supérieure à une valeur seuil haute, un disque d'obturation à commande thermostatique empêche l'écoulement du fluide vers la sortie de bi-passe, tandis que, lorsque la température du fluide d'alimentation est comprise entre ces deux valeurs seuils, le disque laisse le fluide s'écouler autour de lui vers la sortie de bi-passe. En fonctionnement, cet agencement de vanne présente cependant un risque de surpression interne par rapport à la sortie de bi-passe, en particulier à haute température du fluide régulé : en effet, bien qu'il soit courant d'estimer que, à haute température, ce fluide présente une fluidité suffisante pour ne pas risquer des pertes de charge dans le circuit équipé d'une telle vanne, certains fluides et/ou certaines architectures de circuit provoquent, à l'usage, des surpressions internes de la vanne, que le disque d'obturation n'est pas en mesure de contrecarrer, voire qu'il favorise, en raison de sa forme pleine étendue transversalement à l'écoulement de fluide vers la sortie de bi-passe. Ces surpressions sont dommageables à la régulation du fluide et à la tenue en service de la vanne.

Le but de la présente invention est de proposer une vanne thermostatique pour un circuit de circulation de fluide, qui, tout en disposant d'une sortie de bi-passe pouvant être obturée lorsque la température du fluide entrant dans la vanne est soit relativement basse, soit relativement élevée, limite les risques de surpressions internes vis-à-vis de cette sortie de bi-passe, notamment à haute température.

A cet effet, l'invention a pour objet une vanne thermostatique pour un circuit de circulation d'un fluide, notamment associé à un moteur, telle que définie à la revendication 1.

En prévoyant que la première sortie de la vanne selon l'invention est raccordée à une voie de bi-passe, le tiroir permet l'obturation de cette sortie à la fois lorsque la température du fluide entrant dans la vanne est relativement basse, c'est-à-dire inférieure à la première valeur prédéterminée, et lorsque cette température est relativement haute, c'est-à-dire supérieure à la seconde valeur prédéterminée. En outre, indépendamment de la température du fluide entrant dans la vanne, le tiroir garantit que, de son côté amont, la chambre principale ne peut être soumise à une surpression interne significative par rapport à la voie de bi-passe. Lorsque cette vanne est agencée dans un circuit de refroidissement d'un moteur thermique, la totalité ou la quasi-totalité du fluide circulant dans ce circuit peut alors être dirigée soit vers un aérotherme lors du démarrage du moteur, soit vers un radiateur lorsque ce moteur fonctionne à haut régime, sans courir le risque d'un disfonctionnement lié à une surpression interne de la vanne.

D'autres caractéristiques de cette vanne, prises isolément ou selon toutes les combinaisons techniquement possibles, sont énoncées aux revendications 2 à 9.

L'invention a également pour objet un circuit de circulation d'un fluide de refroidissement, associé à un moteur à refroidir au moyen de ce fluide, tel que défini à la revendication 10.

L'invention sera mieux comprise à la lecture de la description qui va suivre, donnée uniquement à titre d'exemple et faite en se référant aux dessins sur lesquels :
- la figure 1 est une coupe schématique d'une vanne selon l'invention ;
- la figure 2 est une représentation schématique d'un circuit de circulation d'un fluide de refroidissement, équipé de la vanne de la figure 1 ;
- la figure 3 est une vue à plus grande échelle du détail cerclé III à la figure 1 ; et
- les figures 4 à 7 sont des vues analogues à la figure 3, à plus petite échelle, illustrant différentes configurations de fonctionnement de la vanne.

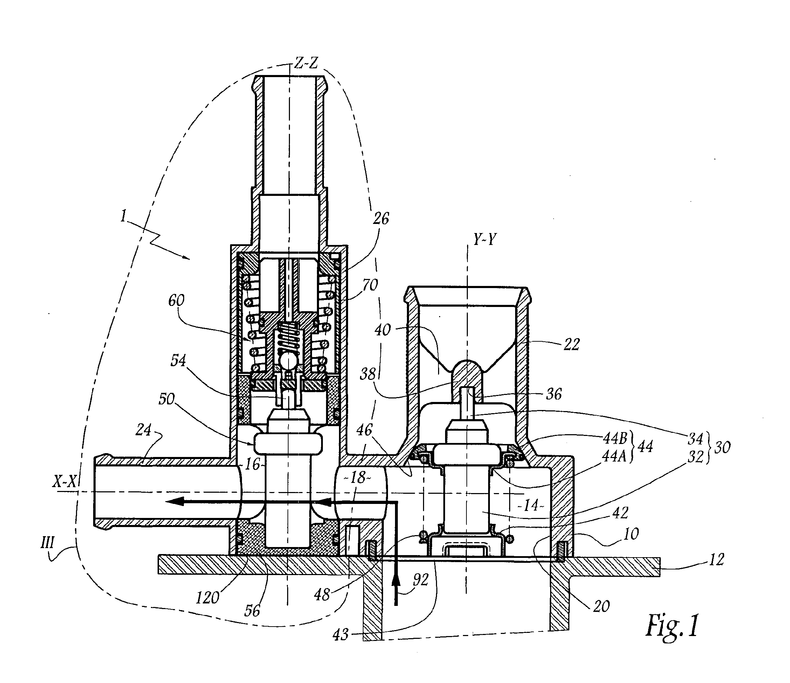

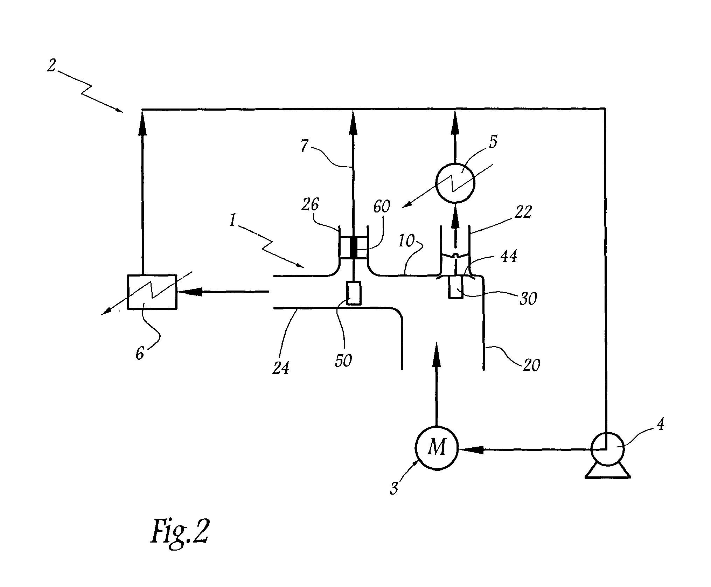

Sur la figure 1 est représentée une vanne thermostatique 1. A la figure 2, cette vanne est intégrée au sein d'un circuit 2 de circulation d'un fluide de refroidissement, destiné à limiter la température de fonctionnement d'un moteur thermique 3. L'entraînement du fluide dans le circuit 2 est assuré par une pompe 4 dont le refoulement est raccordé au moteur 5. Le circuit 2 comporte en outre un radiateur 5 adapté pour abaisser la température du fluide le traversant par échange thermique avec de l'air extérieur, ainsi qu'un aérotherme 6 destiné à utiliser des calories du fluide le traversant pour générer de la chaleur, notamment utilisée pour réchauffer l'habitacle du véhicule auquel appartient le moteur 3. Le fluide circulant dans le circuit 2 est réparti au moyen de la vanne 1, comme détaillé ci-dessous.

A la figure 1, la vanne 1 comporte un boîtier rigide 10, par exemple en matière plastique, sur lequel est rapporté de manière amovible et étanche un capot 12. Le boîtier 10 est creux et délimite ainsi deux chambres intérieures 14 et 16, raccordées l'une à l'autre par un passage tubulaire 18 d'axe X-X, délimité par le boîtier. L'alimentation en fluide de la chambre 14 est prévue par un accès 20 délimité à la fois par le boîtier 10 et le capot 12. Cet accès 20 forme ainsi une entrée tubulaire d'axe Y-Y sensiblement perpendiculaire à l'axe X-X, qui débouche dans la chambre 14. Comme représenté à la figure 2, cette entrée est prévue pour être alimentée par le fluide évacué du moteur 3, après avoir, le cas échéant, refroidi ce dernier.

A l'opposé de l'entrée 20, le boîtier 10 délimite une sortie tubulaire 22 d'axe sensiblement confondu avec l'axe Y-Y. Cette sortie est raccordée en amont à la chambre 14 et, comme représenté à la figure 2, est prévue en aval pour alimenter le radiateur 5.

A l'opposé du passage 18, le boîtier 10 délimite une sortie tubulaire 24, d'axe sensiblement confondu avec l'axe X-X. Cette sortie est raccordée en amont à la chambre 16 et, comme représenté à la figure 2, est prévue en aval pour alimenter l'aérotherme 6.

Le boîtier 10 délimite une troisième sortie 26 en forme de tube étagé et d'axe Z-Z sensiblement perpendiculaire à l'axe X-X et parallèle à l'axe Y-Y. Cette sortie est raccordée en amont à la chambre 16 et, comme représenté à la figure 2, est prévue en aval pour alimenter une voie de bi-passe 7, c'est-à-dire une voie renvoyant directement le fluide sortant de la vanne jusqu'à la pompe 4 et au moteur 3, sans transiter préalablement par le radiateur 5, l'aérotherme 6 ou un organe équivalent.

La vanne 1 comporte un premier élément thermostatique 30 agencé pour l'essentiel dans la chambre 14. Plus précisément, l'élément thermostatique 30 comporte, d'une part, un corps cylindrique creux 32 à l'intérieur duquel est stockée une matière dilatable telle que de la cire et, d'autre part un piston 34 monté coulissant sur le corps 32 et dont une extrémité est logée à l'intérieur de ce corps pour que la cire agisse sur lui. L'élément 30 est logé dans le boîtier 10 de manière que son axe longitudinal, qui correspond à la direction de coulissement du piston 34 par rapport au corps 32, soit sensiblement confondu avec l'axe Y-Y. L'extrémité libre du piston 34 est reçue dans un logement borgne 36 creusé dans un élément d'appui 38 solidaire du boîtier 10. Cette pièce d'appui est par exemple venue de matière avec le tube de sortie 22, en formant des branches 40 qui s'étendent radialement à l'axe Y-Y et qui sont espacées les unes des autres suivant la périphérie intérieure de la sortie 22 pour permettre le passage du fluide à travers cette sortie.

Le corps 32 de l'élément thermostatique 30 est, à son extrémité opposée au piston 32, reçu dans une couronne rigide 42 en pouvant librement coulisser par rapport à celle-ci suivant l'axe Y-Y. La couronne 42 est fixe vis-à-vis du boîtier de vanne 10, des branches 43 venues de matière avec cette couronne étant par exemple enserrées entre le capot 12 et le boîtier 10. A son autre extrémité, le corps 32 est solidarisé à un clapet 44, en étant par exemple emmanché à force dans le corps annulaire 44A de ce clapet. Le clapet 44 est ainsi lié cinématiquement au corps 32 de l'élément 30 de sorte que lorsque le piston tend à être déplacé vers la pièce 38 sous l'effet de la dilatation de la matière contenue dans le corps 32, le corps 32 est repoussé en direction de la couronne 42 et la partie périphérique 44B du clapet 44 s'éloigne d'un siège 46 délimité par le boîtier 10 au niveau du raccordement de la sortie 22 à la chambre 14, cette partie 44B étant constituée d'une garniture d'étanchéité à même d'obturer hermétiquement la sortie 22 vis-à-vis de la chambre 14 lorsqu'elle est pressée contre le siège 46.

En fonctionnement, lorsque la valeur de la température du fluide entrant dans la chambre 14 par l'entrée 20 est supérieure à une valeur prédéterminée, appelée θ₃₀ par la suite, correspondant à la température de déclenchement de l'élément thermostatique 30, la cire du corps 32 se dilate suffisamment pour entraîner le corps 32 en translation selon l'axe Y-Y en direction de l'entrée 20, le piston 34, en appui pressé contre la pièce 38, étant fixe par rapport au boîtier 10. Le corps 32 coulisse à l'intérieur de l'alésage central de la couronne 42, qui guide ainsi la translation de ce corps, et entraîne le clapet 44 en l'éloignant de son siège 46. Un ressort 48, interposé entre la couronne 42 et le corps 44A du clapet 44, est alors comprimé de sorte que, lorsque la température du fluide entrant diminue et que le piston 34 s'escamote dans le corps 32, ce ressort rappelle élastiquement le clapet 44 vers le siège 46.

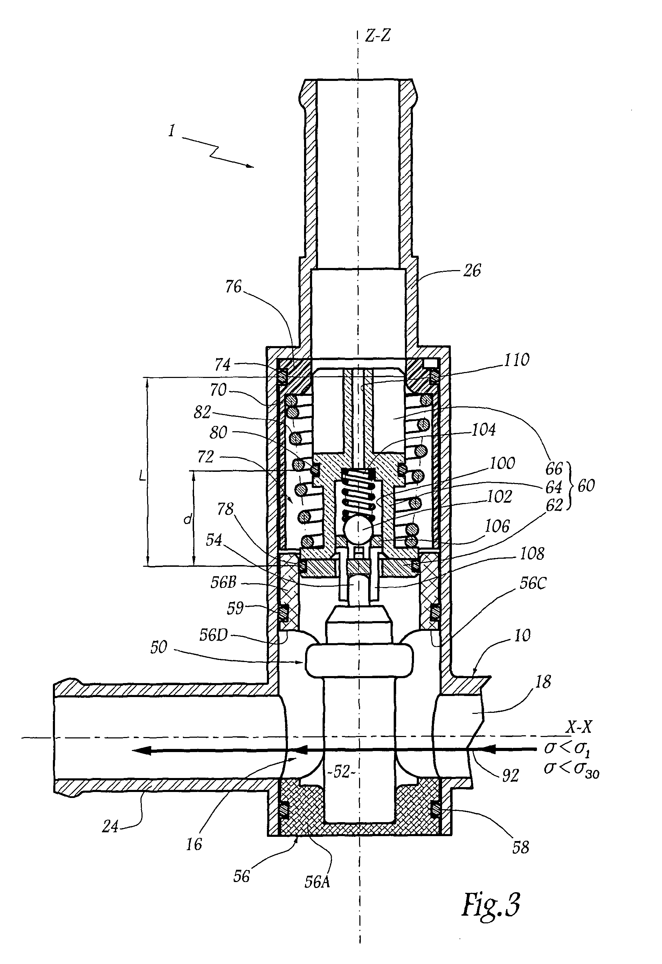

Comme représenté plus en détail à la figure 3, un second élément thermostatique 50 est agencé dans la seconde chambre 16 de la vanne 1. Cet élément présente une structure analogue à l'élément 30 et comporte ainsi un corps 52 et un piston coulissant 54. L'axe longitudinal de l'élément 50 est sensiblement confondu avec l'axe Z-Z.

A la différence du corps 32 de l'élément 30, le corps 52 de l'élément 50 est prévu fixe par rapport au boîtier de vanne 10, en étant par exemple emmanché dans une douille 56 logée et retenue de manière étanche dans la chambre 14. Cette douille se présente sous la forme d'une pièce tubulaire d'axe Z-Z. Une extrémité longitudinale 56A de cette douille est conformée pour retenir fermement le corps 52 tandis que l'extrémité longitudinale opposée 56B est axialement ouverte vers la sortie 26. Suivant sa périphérie extérieure, la douille 56 épouse les parois intérieures de la chambre 16, tout en ménageant des ouvertures radiales 56C et 56D, alignées, suivant l'axe X-X, avec respectivement le passage 18 et la sortie 24. De part et d'autre, suivant l'axe Z-Z, de ces ouvertures, des joints 58 et 59 sont interposés entre la douille et le boîtier.

L'extrémité libre du piston 54 est prévue en appui contre un tiroir 60 déplaçable en translation suivant l'axe Z-Z sous la commande du piston 54. Ce tiroir 60 comporte, suivant l'axe Z-Z et en s'éloignant de la chambre 16 :
- une tête 62 sous forme d'un disque de matière rigide centré sur l'axe Z-Z et dont la zone centrale ménage une surface d'appui pressant pour le piston 54,
- un corps 64 de forme extérieurement cylindrique à base circulaire d'axe Z-Z, et
- une queue 66 de section transversale en forme de croix dont les branches, au nombre de quatre, présentent une dimension transversale maximale sensiblement égale au diamètre extérieur maximal du corps 64.

La tête 62, le corps 64 et la queue 66 sont liés cinématiquement les uns aux autres de manière à n'être déplaçables que d'un seul tenant lors d'utilisation de la vanne. Le corps 64 et la queue 66 sont ainsi venus de matière l'un avec l'autre tandis que la tête 62 est fixée au corps 64 par emmanchement forcé ou par clipsage.

Le tiroir 60 est guidé en translation par une douille 70 logée pour l'essentiel dans le tube de sortie 26, avec interposition d'un joint d'étanchéité 74. Cette douille se présente sous la forme d'une pièce tubulaire d'axe Z-Z, ouverte à ses deux extrémités axiales. La douille 70 délimite ainsi intérieurement une chambre sensiblement cylindrique à base circulaire 72 coaxiale à la chambre 16. A l'extrémité axiale de la douille 70 opposée à la chambre 16, la douille 70 forme un talon 76 qui réduit le diamètre intérieur de la chambre 72 et rend ainsi la partie correspondante de cette dernière en affleurement avec la paroi intérieure de l'extrémité aval du tube de sortie 26. Le diamètre intérieur du talon 76 est sensiblement égal à la dimension transversale des branches de la queue 66 du tiroir 60 de sorte que ce talon reçoit intérieurement et guide en translation cette queue.

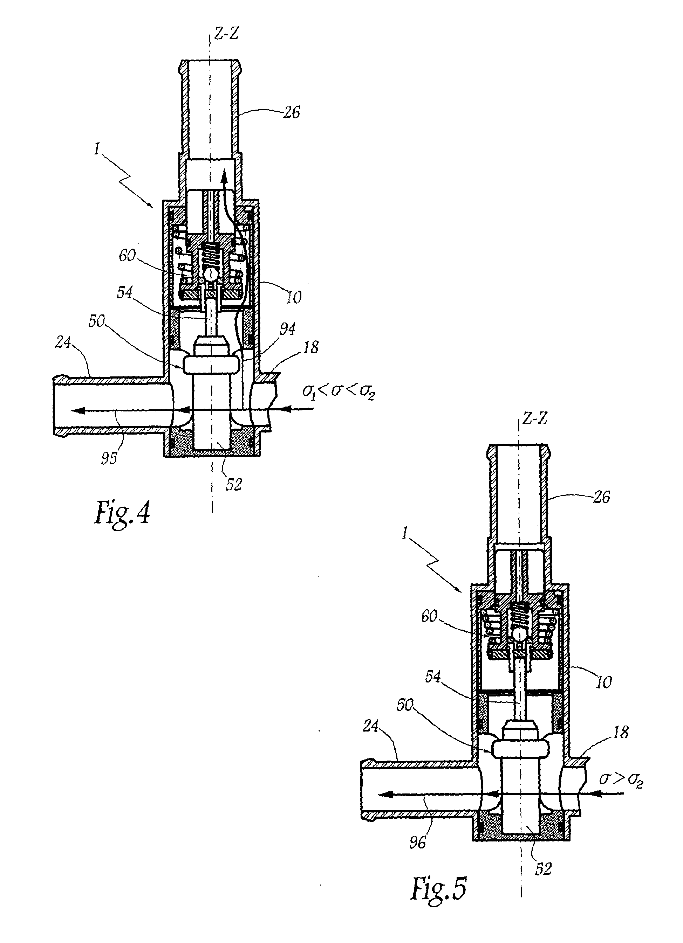

Le tiroir 60 est adapté pour commander l'écoulement de fluide depuis la chambre 16 vers la sortie 26, en fonction de la température du fluide présent dans cette chambre. A cet effet, le tiroir 60 est déplaçable entre une première position d'obturation de la sortie 26, représentée à la figure 3, et une seconde position d'obturation de cette sortie, représentée à la figure 5, les positions intermédiaires du tiroir entre les deux positions précitées permettant l'écoulement du fluide à travers la sortie 22, comme représenté à la figure 4. De plus, la périphérie extérieure de la tête 62 du tiroir 60 présente un diamètre sensiblement égal au diamètre intérieur de l'extrémité 56A de la douille 56 et est équipé d'un joint annulaire d'étanchéité 78 de sorte que, lorsque le tiroir 60 est dans sa position de la figure 3, le contact entre ce joint 78 et la douille 56 isole hermétiquement la chambre 72 vis-à-vis de la chambre 16. Le corps 64 du tiroir 60 est équipé, au niveau de sa liaison avec la queue 66, d'un autre joint annulaire d'étanchéité 80 permettant, lorsque le tiroir est dans sa position de la figure 5, d'isoler hermétiquement l'extrémité aval de la sortie 26 vis-à-vis de la chambre 72. La distance d séparant les joints 78 et 80 est inférieure à la longueur L de la chambre 72 pour permettre l'écoulement de fluide autour du tiroir lorsque ce dernier est dans une de ses positions intermédiaires, comme celle de la figure 4.

En fonctionnement, les déplacements du tiroir 60 sont commandés par le déploiement du piston 54 vis-à-vis du corps 52 de l'élément thermostatique 50 : le tiroir est dans sa position d'obturation de la figure 3 lorsque le piston 54 est escamoté dans le corps 52, c'est-à-dire lorsque ce corps 52 est soumis à une température inférieure à une première valeur de température prédéterminée, appelée θ₁ par la suite, à laquelle le piston commence de se déployer, tandis que le tiroir est dans sa position d'obturation de la figure 5 lorsque le corps est soumis à une température supérieure à une seconde valeur de température prédéterminée, appelée θ₂ par la suite, à laquelle le piston est suffisamment déployé pour obturer la sortie 26 par son joint 80.

Ainsi, en envisageant le fonctionnement global de la vanne 1 de la figure 1, différentes configurations de marche sont possibles :
(1) Au démarrage du moteur 3, le fluide initialement au repos dans le circuit 2 présente une température θ de valeur nettement inférieure à celle de sa température une fois le moteur thermique en régime normal de fonctionnement de sorte que ni l'élément thermostatique 30, ni l'élément thermostatique 50, dont les corps respectifs 32 et 52 sont balayés par le fluide entrant dans la vanne 1 par l'accès 20 et traversant successivement les chambres 14 et 16 jusqu'à la sortie 24, ne sont soumis à une température suffisante pour provoquer le déploiement de leurs pistons respectifs 34 et 54. Autrement dit, θ est inférieure à θ₁ et donc à θ₂, ainsi qu'à θ₃₀. La vanne 1 est ainsi telle que représentée aux figures 1 et 3, c'est-à-dire avec les sorties 22 et 26 obturées par respectivement le clapet 44 et la tête 62 du tiroir 60. La circulation du fluide est indiqué par la flèche 92. La totalité du fluide entrant dans la vanne est donc envoyée vers l'aérotherme 6 d'où il est acheminé, via la pompe 4, jusqu'au moteur 3 où le fluide se réchauffe au fur et à mesure de l'élévation de température du moteur. Les capacités de chauffage de l'habitacle du véhicule par l'aérotherme 6 sont alors pleinement disponibles et la boucle de circulation de fluide via l'aérotherme 6 permet une montée en température rapide et homogène de l'ensemble du circuit 2 et du moteur 3.
(2) Au moment où la température θ du fluide entrant dans la vanne 1 atteint et dépasse la première valeur prédéterminée θ₁, c'est-à-dire celle correspondant au début du déploiement du piston 54 de l'élément thermostatique 50, ce piston se déplace en translation selon l'axe Z-Z par rapport au boîtier 10 et entraîne, par appui de son extrémité libre sur la tête 62 du tiroir 60, le tiroir dans un mouvement de translation correspondant. Le tiroir 60 passe alors de sa position d'obturation de la figure 3 à sa position intermédiaire de la figure 4, permettant l'écoulement autour de lui du fluide provenant de la chambre 16, vers la sortie de bi-passe 26, via la chambre 72, comme indiqué par la flèche 94. Une partie du fluide admis dans la chambre 16 continue d'alimenter la sortie d'aérotherme 24, comme indiqué par la flèche 95.
(3) Si la température θ du fluide entrant dans la vanne 1 continue d'augmenter et que sa valeur dépasse θ₃₀, c'est-à-dire que l'élément thermostatique 30 est soumis à une température suffisante pour provoquer le déploiement de son piston 34, le corps 32 de cet élément déplace alors, en translation suivant l'axe Y-Y et en direction de l'entrée 20, le clapet 44, envoyant ainsi une partie du fluide entrant vers le radiateur 5.
(4) Si la température du fluide entrant dans la vanne continue d'augmenter et atteint la seconde valeur prédéterminée θ₂ relative à l'élément thermostatique 50, le piston 54 de cet élément se déploie alors suffisamment pour pousser le tiroir 60 dans sa position d'obturation de la figure 5, fermant ainsi l'écoulement de fluide à travers la sortie de bi-passe 26. La totalité du fluide entrant dans la vanne 1 se répartit alors entre, d'une part, la sortie de radiateur 22, pleinement ouverte par le clapet 44, et d'autre part, la sortie d'aérotherme 24 comme indiqué par la flèche 96 à la figure 5. Dans la mesure où la sortie 22 présente une section d'écoulement nettement supérieure à celle de la sortie 24, la plus grande partie du fluide entrant est envoyée vers le radiateur 5 pour y être refroidie.

Lorsque la température θ du fluide entrant diminue et que sa valeur repasse au-dessous de θ₂, un ressort de compression 82, interposé entre le talon fixe 76 et le tiroir 60, rappelle élastiquement le tiroir vers la chambre 16 et le ramène dans une position intermédiaire analogue à celle de la figure 4. Si cette température θ diminue davantage et que sa valeur repasse successivement au-dessous de θ₃₀ et de θ₁, le ressort 48 rappelle le clapet 44 contre le siège 46 et le ressort 82 rappelle le tiroir jusqu'à sa position de la figure 3.

On a considéré ci-dessus que la valeur de température θ₃₀ correspondant au déploiement de l'élément thermostatique 30 est inférieure à la valeur de température θ₂ correspondant à la fermeture de la sortie 26 par le tiroir 60 dans sa position de la figure 5. En variante, ces deux valeurs de température θ₃₀ et θ₂ peuvent être prévues sensiblement égales de manière à n'envoyer le fluide entrant vers le radiateur 4 que simultanément à l'arrêt de l'alimentation de la voie de bi-passe 7.

Ainsi, la vanne 1 permet de disposer d'une sortie de bi-passe à travers laquelle l'écoulement de fluide entrant dans la vanne est empêché lorsque la température de ce fluide entrant est soit inférieure à la première valeur de température θ₁, soit supérieure à la seconde valeur de température θ₂. A titre d'exemple, pour un circuit de refroidissement d'un moteur de véhicule automobile, dans lequel circule de l'eau, les première et seconde valeurs prédéterminées θ₁ et θ₂ sont respectivement égales à environ 90 et 130°C.

Selon l'invention, le tiroir 60 est aménagé pour commander l'écoulement du fluide vers la sortie de bi-passe 26 en fonction de la différence de pression régnant de part et d'autre, suivant l'axe Z-Z, du tiroir, et ce indépendamment de sa position vis-à-vis du boîtier 10, c'est-à-dire indépendamment de la température du fluide entrant dans la vanne. A cet effet, comme représenté aux figures 1 et 3, le corps 64 du tiroir 60 est alésé de manière à délimiter un logement sensiblement cylindrique 100 d'axe Z-Z. A l'intérieur de ce logement sont disposés une bille 102 et un ressort de compression 104 appuyé contre cette bille.

Du côté amont du tiroir 60, c'est-à-dire du côté de sa tête 62, le logement 100 est hermétiquement fermé par une pièce 106 délimitant un siège d'appui étanche pour la bille 102 et avantageusement venu de matière avec la tête 62 par l'intermédiaire de branches 108 écartées les unes des autres suivant une direction orthoradiale à l'axe Z-Z. Entre ces branches 108, la tête 62 est axialement évidée de sorte que le fluide contenu dans la chambre 16 est librement admis jusqu'à la pièce de siège 106 où, selon que la bille 102 est en appui hermétique ou non contre cette pièce, le fluide peut être admis dans le logement 100.

Le logement 100 communique librement avec le côté aval du tiroir 60 par l'intermédiaire d'un alésage 110 traversant axialement de part en part la queue 66. Au niveau du débouché de cet alésage 110 dans le logement 100, le corps 64 du tiroir 60 forme un épaulement intérieur sur lequel le ressort de compression 104 prend appui.

La charge du ressort 104 est pré-fixée pour que la bille 102 soit maintenue en contact pressant contre la pièce de siège 106 tant que la différence de pression ΔP de part et d'autre de cette bille 102, c'est-à-dire la différence entre la pression régnant dans la chambre 16 et la pression régnant dans la sortie de bi-passe 26 en aval du tiroir 60, est inférieure à un seuil prédéterminé P_{S}, par exemple de l'ordre d'environ 1 bar.

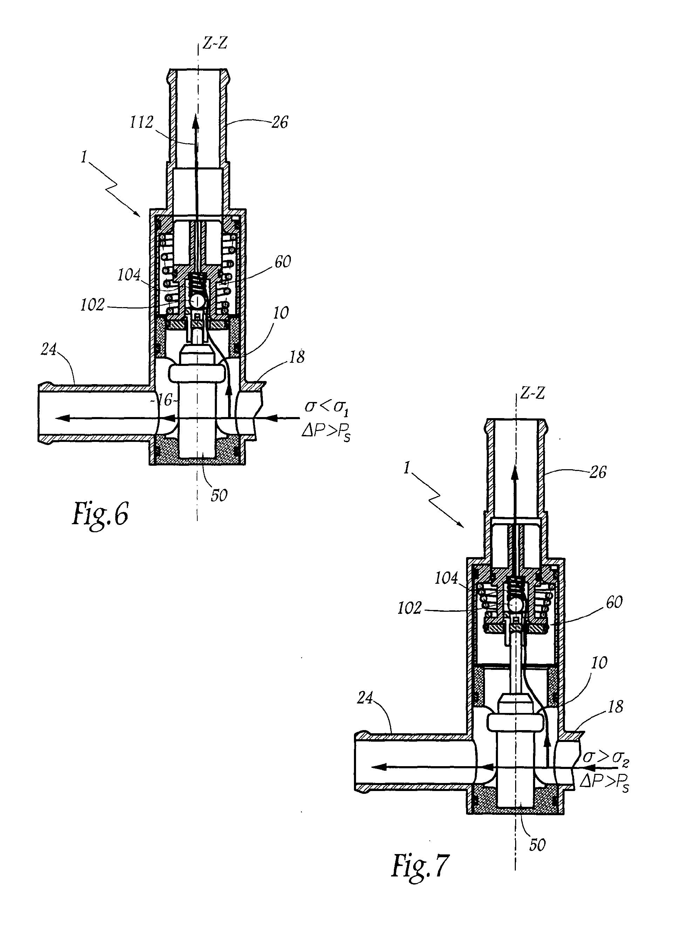

En fonctionnement, si, comme à la figure 6, la différence de pression ΔP est supérieure au seuil P_{S}, le ressort 104 se comprime sous l'effet d'entraînement de la bille 102 et le fluide contenu dans la chambre 16 passe alors successivement entre les branches 108, à travers la pièce de siège 106, autour de la bille 102 et par l'alésage 110 pour alimenter la sortie de bi-passe 26, comme indiqué par la flèche 112. Le logement 100 et l'alésage 110 forment ainsi un canal de circulation du fluide entre l'amont et l'aval du tiroir 60.

Lorsque la pression régnant en amont du tiroir 60 passe à une valeur inférieure de par exemple 1 bar à celle régnant du côté aval de ce tiroir, le ressort 104 repousse la bille 102 contre son siège. La bille et le ressort 104 sont alors dans la configuration des figures 3 à 5.

Toute surpression importante de la chambre 16 vis-à-vis de la voie de bi-passe 7 est ainsi limitée.

L'agencement pressostatique à bille et ressort décrit ci-dessus fonctionne indépendamment de la température du fluide circulant dans la vanne 1. A titre d'exemple, à la figure 7, est représenté un exemple de fonctionnement de la vanne pour lequel la température θ du fluide entrant est supérieure à la seconde valeur de température prédéterminée θ₂ et pour lequel une surpression importante de la chambre 14 est en train d'être corrigée.

A l'inverse, lorsque la température du fluide circulant dans la vanne 1 est comprise entre les valeurs prédéterminées θ₁ et θ₂ et que le tiroir est dans une position intermédiaire comme celle de la figure 4, le fluide s'écoule autour du tiroir sans condition de pression. L'agencement pressostatique à bille et à ressort est alors inactif tant que la section d'écoulement du fluide autour du tiroir est suffisante vis-à-vis de celle à travers le canal 100, 110 pour éviter une surpression interne trop importante.

Le fait d'intégrer cet agencement pressostatique dans le tiroir 60, qui, comme expliqué ci-avant, commande l'écoulement du fluide vers la voie de bi-passe 7 en fonction de la température θ du fluide entrant dans la vanne, permet d'obtenir une régulation thermo-pressostatique de cet écoulement, ce qui jusqu'alors n'était pas considéré comme souhaité puisqu'il est jusqu'à présent courant d'estimer que, lorsque le fluide circulant dans la vanne est à une relativement haute température, sa fluidité est suffisamment importante pour ne pas risquer des pertes de charge dans le circuit 2. A l'usage, pour certains fluides de refroidissement et/ou pour certaines architectures de circuit de circulation, il s'est avéré que, même lorsque le fluide est particulièrement chaud, les risques de surpression interne de la vanne ne sont pas exclus. Ainsi, la partie de la vanne 1 représentée aux figures 3 à 7 est par exemple adaptée pour un circuit de circulation d'huile.

Le montage de la vanne 1 est facile, en particulier en ce qui concerne sa partie représentée aux figures 3 à 7. Pour ce faire, le tiroir 60 est dans un premier temps fabriqué en introduisant la bille 102 et le ressort 104 dans le logement 100 du corps 64, puis en refermant ce logement avec la tête 62. Le tiroir ainsi assemblé est ensuite introduit à l'intérieur de la douille 56 alors que cette dernière est disposée à l'extérieur du boîtier 10, avec interposition du ressort 82. La douille 70 est ensuite rapportée autour de la tête 62 du tiroir 60, puis l'ensemble pré-assemblé constitué du tiroir et des douilles 56 et 70 est introduit à l'intérieur du boîtier 10 suivant l'axe Z-Z, via une ouverture 120 traversant la partie de paroi du boîtier 10 située en regard de la sortie de bi-passe 26. Cet ensemble pré-assemblé est enfin maintenu en place dans le boîtier en rapportant le capot 12 sur le boîtier 10, comme à la figure 1.

Divers aménagements et variantes à la vanne 1 décrite ci-dessus sont par ailleurs envisageables :
- la géométrie du boîtier 10 décrite et représentée ci-avant n'est qu'illustrative ; de nombreuses géométries différentes sont envisageables, en particulier en ce qui concerne l'implantation des différentes entrée(s) et sortie(s) de fluide, comme il est courant dans le domaine des vannes pour automobile ; à titre d'exemple, le passage 18 et la sortie d'aérotherme 24 peuvent être axialement décalés l'un par rapport à l'autre de manière à provoquer davantage de turbulences autour du corps 52 de l'élément thermostatique 50 lorsque le fluide traverse la chambre 16, favorisant ainsi la réactivité de cet élément thermostatique ; et/ou
- le boîtier de la vanne n'est pas nécessairement monobloc ; les chambres 14 et 16 peuvent par exemple être délimitées par des carters respectifs distincts et sont alors raccordées l'une à l'autre par un organe tubulaire rigide ou souple, de fonction analogue au passage 18 du boîtier 10 décrit ci-avant.

## Revendications

1. Vanne thermostatique (1) pour un circuit (2) de circulation d'un fluide, notamment associé à un moteur (3), comportant :
- un boîtier (10) qui délimite intérieurement une chambre principale (16) dans laquelle débouche au moins une entrée de fluide (18) et à laquelle sont raccordées au moins deux sorties de fluide (24, 26),
- un élément thermostatique (50) qui comprend, d'une part, un corps (52) contenant une matière dilatable et disposé en partie dans la chambre principale (16) et, d'autre part, un piston (54) monté coulissant sur le corps et,
- un tiroir (60) d'obturation sélective d'une première (26) des sorties de fluide, déplaçable par rapport au boîtier (10), entraîné en déplacement par une partie (54) de l'élément thermostatique (50) mobile par rapport au boîtier, et adapté pour, d'une part, être déplacé en translation par la partie mobile de l'élément thermostatique entre une première (figure 3) et une seconde (figure 5) positions d'obturation de la première sortie lorsque la température (θ) du fluide circulant dans la chambre est soit inférieure à une première valeur de température prédéterminée (θ₁) , soit supérieure à une seconde valeur de température prédéterminée (θ₂) supérieure à ladite première valeur, et, d'autre part, laisser s'écouler le fluide (flèche 94) vers la première sortie, autour du tiroir lorsque la température (θ) du fluide circulant dans la chambre est comprise entre les première et seconde valeurs prédéterminées (θ₁, θ₂),
**caractérisée en ce que** le tiroir (60) est équipé de moyens pressostatiques (100, 102, 104, 110) adaptés pour, indépendamment de la température (θ) du fluide entrant dans la vanne (1), laisser s'écouler le fluide vers la première sortie (26) à travers le tiroir (60) lorsque la pression régnant en amont du tiroir est supérieure d'un seuil prédéterminé (Pₛ) à la pression régnant en aval du tiroir.

2. Vanne suivant la revendication 1, **caractérisée en ce que**, lorsque la température (θ) du fluide circulant dans la chambre principale (16) est comprise entre les première et seconde valeurs de température prédéterminées (θ₁, θ₂), le tiroir (60) occupe une position intermédiaire (figure 4) entre ses deux positions d'obturation.

3. Vanne suivant l'une des revendications 1 ou 2, **caractérisée en ce que** la vanne (1) comporte, au niveau de la première sortie (26), une chambre (72) d'écoulement du fluide autour du tiroir (60) et **en ce que** le tiroir porte deux zones (78, 80) d'appui étanche contre des sièges respectifs (56A, 76) fixes par rapport au boîtier (10), ces deux zones étant, suivant la direction (Z-Z) de translation du tiroir, écartées l'une de l'autre d'une distance (d) inférieure à la dimension correspondante (L) de la chambre d'écoulement (72).

4. Vanne suivant l'une quelconque des revendications précédentes, **caractérisée en ce que** le tiroir (60) comporte une paroi (62) d'appui pressant pour la partie mobile (54) de l'élément thermostatique (50), adaptée pour transmettre au reste du tiroir un effort d'entraînement en translation du tiroir de sa première vers sa seconde position d'obturation.

5. Vanne suivant l'une quelconque des revendications précédentes, **caractérisée en ce qu'**elle comporte un organe élastique (82) de rappel du tiroir (60) de sa seconde vers sa première position d'obturation.

6. Vanne suivant l'une quelconque des revendications précédentes, **caractérisée en ce que** les moyens pressostatiques comportent un canal (100, 110) de circulation du fluide entre l'amont et l'aval du tiroir (60), ainsi qu'un obturateur (102) de ce canal, déplaçable par rapport au tiroir en fonction de la différence de pression (ΔP) régnant en amont et en aval du tiroir.

7. Vanne suivant la revendication 6, **caractérisée en ce que** l'obturateur (102) est logé à l'intérieur d'une partie (100) du canal de circulation (100, 110) qui est délimité intérieurement par le tiroir (60).

8. Vanne suivant l'une des revendications 6 ou 7, **caractérisée en ce que**, du côté amont du tiroir (60), le canal de circulation (100, 110) est hermétiquement fermé par une pièce (106) d'appui pour, à la fois, l'obturateur (102) de ce canal et la partie mobile (54) de l'élément thermostatique (50).

9. Vanne suivant l'une quelconque des revendications précédentes, **caractérisée en ce que** le boîtier (10) délimite intérieurement une chambre secondaire (14) dans laquelle débouche une entrée de fluide (20) et à laquelle sont raccordées à la fois l'entrée (18) de la chambre principale (16) et une autre sortie de fluide (22), et **en ce que** la vanne (1) comporte en outre un autre élément thermostatique (30) disposé au moins en partie dans la chambre secondaire (14) et des moyens (44) d'obturation de la sortie (22) associée à la chambre secondaire (14), déplaçables par rapport au boîtier (10) et entraînés en déplacement par une partie (32) de l'autre élément thermostatique (30) mobile par rapport au boîtier.

10. Circuit (2) de circulation d'un fluide de refroidissement, associé à un moteur (3) à refroidir au moyen de ce fluide, comportant une vanne (1) conforme à la revendication 9, un radiateur (4) de refroidissement du fluide alimenté en fluide par la sortie de vanne (22) associée à la chambre secondaire (14), un aérotherme de chauffage (6) alimenté en fluide par une seconde sortie de vanne (24) associée à la chambre principale (16), et une voie de bi-passe (7) alimentée en fluide par la première sortie de vanne (26) associée à la chambre principale (16), le fluide évacué du radiateur, de l'aérotherme et de la voie de bi-passe étant envoyé au moteur à refroidir (3).
